# EUROPEAN PATENT APPLICATION

(11) **EP 2 975 898 A1**
(43) Date of publication of application: **20.01.2016**
(21) Application number: 14765346.3
(22) Date of filing: 28.02.2014
(51) Int. Cl.: H04W 72/08

(54) **SYSTEM AND METHOD FOR COORDINATING INTERFERENCE BETWEEN COMMUNICATIONS NODES**

(30) Priority: 15.03.2013 CN 201310084518
(71) Applicant: ZTE Corporation, Shenzhen, Guangdong 518057 (CN)
(72) Inventor: LI, Yu Ngok, Shenzhen Guangdong 518057 (CN); LI, Jian, Shenzhen Guangdong 518057 (CN); XIE, Feng, Shenzhen Guangdong 518057 (CN); XUE, Yan, Shenzhen Guangdong 518057 (CN); ZHENG, Yong, Shenzhen Guangdong 518057 (CN); ZHANG, Junfeng, Shenzhen Guangdong 518057 (CN)
(74) Representative: Brevalex
(86) International application number: PCT/CN2014/072749
(87) International publication number: WO 2014/139363

(57) **Abstract**

Disclosed are a system and a method for interference coordination between communication nodes. A first-type wireless transceiver apparatus of the system is configured to report status information by sending first-type signaling to a second-type wireless transceiver apparatus, and perform data transmission and/or to perform measurement according to second-type signaling. The second-type wireless transceiver apparatus is configured to allocate resources according to the first-type signaling, and indicate the resource allocation by sending the second-type signaling to the first-type wireless transceiver apparatus. The method comprises: reporting status information by sending first-type signaling to a second-type wireless transceiver apparatus, and peforming data transmission and/or performing measurement according to second-type signaling; and allocating resources by sending the second-type signaling to a first-type wireless transceiver apparatus. By using the embodiments of the present invention, the problem of interference between adjacent communication nodes of a variety of base stations in a dense deployment network is solved, and the problem of interference to a user due to the interference between the communication modes is solved, thereby ensuring reliable reception of downlink data.

## Description

### TECHNICAL FIELD

The present disclosure relates to communications technology, and in particular, to a system and a method for interference coordination between communication nodes.

### BACKGROUND

Data statistics show that 80%-90% of system traffic in the future will happen indoors and in hot spots. However, current cellular network technology is characterized that outdoors are paid more attention than indoors, cellular network than isolated hot spots, and mobile handover than movement with a fixed point and so on. One of the most important tasks in a Long-Term Evolution advance (LTE-Advance) system is to optimize networking of indoors and hot spots. A heterogeneous network can meet requirements provided by the LTE-Advance system well since it significantly increases system traffic and improves the overall efficiency of the network. In the heterogeneous network, some transmitting nodes with less transmit power compared with current cell base stations are introduced, including Picocells, Femtocells and relay stations (Relay) for relaying signals. The introduction of these nodes provides good coverage for indoors and hot spots. These nodes have less transmit power and allow for flexible networking deployment. Furthermore, these nodes have small coverage and thus more easily utilize potential high-frequency spectrum of the LTE-Advance system. However, an introduction of new nodes changes topological structures of an original network so that interference between cells in the network becomes a new challenge.

Interference between cells in a heterogeneous network is more severe than that in a homogeneous network. Thus, interference coordination between cells is needed so as to reduce the interference between cells. Herein, the homogeneous network refers to a network in which only Evoluted Node Base stations (eNBs) and User Equipments (UEs) are configured, while the heterogeneous network refers to a network in which Low Power Nodes (LPNs) are provided in microcells. The low power nodes include Remote radio heads (RRHs), Pico eNBs for covering hotspots, Home eNBs (HeNBs) which are also called Femtos, Relay nodes, etc..

In the 62^{nd} meeting of 3GPP (3^{rd} Generation Partnership Project) LTE RAN (Radio Access Network)1, it is determined to use time domain, i.e., apply an ABS (Almost Blank Subframe) as a main means for solving interference between cells in a Macro-Pico scenario of the heterogeneous network.

The ABS refers to a subframe in which only CRS (Common Reference Signal) is sent and any other signals cannot be sent over this ABS. That is, several downlink subframes in an aggressor cell which generates severe interference are configured as ABSs and a CEU (Cell edge User) in a corresponding victim cell which is subject to severe interference transmits control channels and data only when the subframes of the aggressor cell are ABSs. The CEU in the victim cell may be subject to severe interference between cells and thus the CEU is called a victim UE.

In the 67^{th} meeting of 3GPP RAN1, the definition of the ABS is further enriched. Reduced power ABS is determined as an effective means for reducing interference between cells. Reduced power ABS refers to a subframe in which a signal is sent at a low power over the ABS wherein the transmit power of CRS keeps unchanged. Thus, the original ABS is called a Zero power ABS. By the definition of the new ABS, not only the interference to the victim UE is reduced but also the overall performance of the aggressor cell is improved via the reduced power ABS. Therefore, the load capacity of the whole network topology is increased.

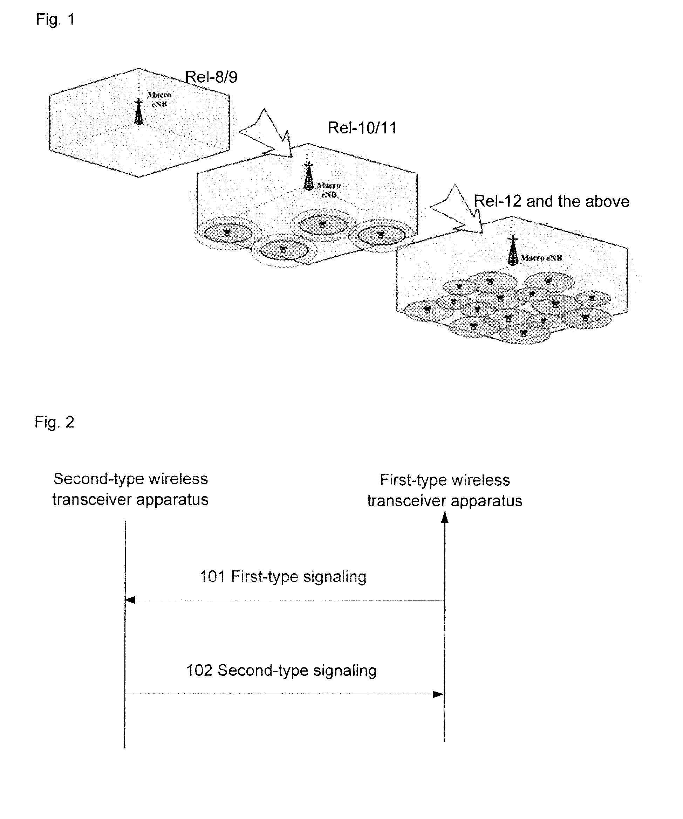

Along with further development of the LTE-Advanced system, coordinating transmission and relay technology are used, a Remote Radio Unit (RRU) is introduced and a new architecture of a Centralized Radio Access Network (C-RAN) is utilized. The networking is expanded so that multi-point coordination is further developed, thereby facilitating hybrid networking among Macrocells, Microcells, Picocells and other multi-layered networks so as to form a dense deployment network. Fig. 1 is a schematic diagram illustrating deployment evolution of network topology in the prior art. In Fig. 1, network deployment supported by Rel-12 and the above protocols is deployment of a dense network. In case of deployment of a dense network, increase in the number of low power nodes can cause interference problems between low power nodes to become increasingly prominent, and the serious interference problems caused by adjacent low power nodes on UE downlink data reception will affect reliable reception of user downlink. If the existing interference coordination scheme between base stations is still used, for example elCIC of Rel-10, it just coordinates interference between a Macro eNB and a Pico eNB, and cannot solve interference between Pico eNBs. That is, the use of the existing technology only solves a specified type of interference problems between adjacent communication nodes, and does not apply for all types of interference problems between adjacent communication nodes. If coordination of resource scheduling between adjacent communication nodes can be performed through the signaling carrying the status, the interference problems can be effectively solved. However, with regard to the above problems, there is not a valid solution yet, and hence a new interference coordination scheme is needed to be introduced.

### SUMMARY

In view of this, the main purpose of the embodiments of the present disclosure is to provide a system and method for interference coordination between communication nodes in order to resolve interference problems between adjacent communication nodes such as various types of base stations in a dense deployment network, to solve the interference for a user caused by interference problems between adjacent communication nodes, thereby ensuring reliable reception of downlink data of the user.

To achieve this objective, the technical solutions of the present disclosure can be implemented as follows.

A system for interference coordination between communication nodes comprises a first-type wireless transceiver apparatus and a second-type wireless transceiver apparatus, wherein,
the first-type wireless transceiver apparatus is configured to send first-type signaling to the second-type wireless transceiver apparatus to report status information, and perform data transmission and/or to perform measurement according to second-type signaling; and
the second-type wireless transceiver apparatus is configured to perform resource allocation according to the first-type signaling and send the second-type signaling to the first-type wireless transceiver apparatus to indicate the resource allocation.

In an aspect, the first-type wireless transceiver apparatus is further configured to perform data transmission and/or to perform measurement according to a resource allocation indication contained in the second-type signaling; and
the second-type wireless transceiver apparatus is further configured to perform the resource allocation according to the status information contained in the first-type signaling and obtain the resource allocation indication.

In an aspect, the first-type wireless transceiver apparatus is a small cell base station, and the second-type wireless transceiver apparatus is a Macro base station; and/or,
the first-type wireless transceiver apparatus is a slave base station of the second-type wireless transceiver apparatus which has a master-slave relationship with the first-type wireless transceiver apparatus, and the second-type wireless transceiver apparatus is a master base station of the first-type wireless transceiver apparatus which has a master-slave relationship with the second-type wireless transceiver apparatus; and/or,
the first-type wireless transceiver device is a base station which has an equal relationship with the second-type wireless transceiver apparatus, and the second-type wireless transceiver apparatus is a base station which has an equal relationship with the first-type wireless transceiver apparatus.

In an aspect, the master-slave relationship is a relationship of resource allocation from one side and status information reporting from another side.

In an aspect, the slave base station is a base station for reporting status information and the master station is a base station for allocating resources.

In an aspect, there is a designated reception-transmission relationship between the first-type wireless transceiver apparatus and the second-type wireless transceiver apparatus.

In an aspect, the second-type wireless transceiver apparatus is further configured to determine a manner of resource allocation according to the received first-type signaling from one or more first-type wireless transceiver apparatuses, and inform one or more first-type wireless transceiver apparatuses of the determined manner of resource allocation via the second-type signaling.

In an aspect, the first-type wireless transceiver apparatus is further configured to perform data transmission and/or to perform measurement according to the second-type signaling, and inform a terminal to measure.

In an aspect, the measurement is at least one of radio link monitoring (RLM), radio resource management (RRM), reference signal received power (RSRP), reference signal received quality (RSRQ), received signal strength indicator (RSSI), interference measurement and channel status measurement; and the channel status measurement comprises reference signal based and/or synchronization signal based measurement.

In an aspect, the system further comprises a group unit configured to divide wireless transceiver apparatuses in a network topology into groups.

In an aspect, wireless transceiver apparatuses in one group comprise the first-type wireless transceiver apparatus and/or the second-type wireless transceiver apparatus.

In an aspect, the group unit is further configured to divide the wireless transceiver apparatuses into groups based on geographic locations of the wireless transceiver apparatuses.

In an aspect, the group unit is further configured to perform resource allocation cooperation according to the wireless transceiver apparatuses in the groups.

In an aspect, the group unit is further configured to perform resource allocation cooperation between the groups via the second-type wireless transceiver apparatus.

A method for interference coordination between communication nodes includes that
a first-type wireless transceiver apparatus sends first-type signaling to a second-type wireless transceiver apparatus to report status information, and peforms data transmission and/or performs measurement according to second-type signaling; and
the second-type wireless transceiver apparatus performs resource allocation according to the first-type signaling and sends the second-type signaling to the first-type wireless transceiver apparatus to indicate the resource allocation.

In an aspect, the method further includes that the second-type wireless transceiver apparatus performs the resource allocation according to the status information contained in the first-type signaling and derives a resource allocation indication; and the first-type wireless transceiver apparatus transmits and/or measures data according to the resource allocation indication contained in the second-type signaling.

In an aspect, the second-type signaling is resource indication signaling.

In an aspect, the resource indication signaling includes an indication of time-domain resources and/or requency-domain resources capable of being scheduled and used by the first-type wireless transceiver apparatus, and/or an indication of resource allocation duration.

In an aspect, the second-type signaling is delivered by a signaling exchange interface between the first-type wireless transceiver apparatus and the second-type wireless transceiver apparatus.

In an aspect, the signaling exchange interface is one of an X2 interface, a radio resource control (RRC) signaling interface, and an operation, maintenance and management (OAM) interface.

In an aspect, the delivery by the signaling exchange interface includes delivering via an existing non-UE related message, and/or a newly-added non-UE-related message over the signaling exchange interface.

In an aspect, the existing non-UE related message includes an Almost Blank Subframe information (ABS Information) message and/or a Relative Narrowband Tx Power message; and
the newly-added non-UE-related message includes a ABS or switch status indication message, and/or, a bitmap message for indicating information occupied by a Hybrid Automatic Repeat reQuest (HARQ) process, and/or, a bitmap message for indicating frequency-domain physical resources block (PRB) distribution.

In an aspect, the first-type signaling is status report signaling.

In an aspect, the status report signaling is at least one of the following information: an E-UTRAN Cell Global Identifier (ECGI), a resource request message, a request resource size, a loading indication, a traffic priority indication, a traffictraffic service or channel quality indication, atraffic traffic activity predication indication, a resource utilization situation and a resource release message.

In an aspect, the first-type signaling is delivered by a signaling exchange interface between the first-type wireless transceiver apparatus and the second-type wireless transceiver apparatus.

According to the embodiments of the present disclosure, a first-type wireless transceiver apparatus reports status information by sending first-type signaling to a second-type wireless transceiver apparatus, and transmits and/or measures data according to second-type signaling. The second-type wireless transceiver apparatus allocates resources according to the first-type signaling, and indicates the resource allocation by sending the second-type signaling to the first-type wireless transceiver apparatus. As a result of the embodiments of the present disclosure, resource coordination is performed between adjacent communication nodes via the status information contained by signaling, and thus interference problem can be effectively solved, that is, interference for a user caused by the interference between adjacent communication nodes can be solved.

### BRIEF DESCRIPTION OF THE DRAWINGS

Fig. 1 is a schematic diagram illustrating deployment evolution of network topology in the prior art;
Fig. 2 is a flow chart of the implementation principle of a method of signaling interaction between communication nodes according to an embodiment of the present disclosure;
Fig. 3 is a flow chart of periodic signaling interactions between communication nodes according to an embodiment of the present disclosure;
Fig. 4 is a flow chart of further collaboration between communication nodes according to an embodiment of the present disclosure;
Fig. 5 is flow chart of signaling interactions between peer-to-peer base stations according to an embodiment of the present disclosure;
Fig. 6 is a grouped topology diagram of a wireless transceiver apparatus according to an embodiment of the present disclosure;
Fig. 7 is a flow chart of signaling interactions for measuring between communication nodes according to an embodiment of the present disclosure.

### DETAILED DESCRIPTION

According to the embodiments of the present disclosure, a first-type wireless transceiver apparatus reports status information by sending first-type signaling to a second-type wireless transceiver apparatus, and transmits and/or measures data according to second-type signaling. The second-type wireless transceiver apparatus allocates resources according to the first-type signaling, and indicates the resource allocation by sending the second-type signaling to the first-type wireless transceiver apparatus.

A system for interference coordination between communication nodes includes a first-type wireless transceiver apparatus and a second-type wireless transceiver apparatus. The first-type wireless transceiver apparatus is configured to send first-type signaling to the second-type wireless transceiver apparatus, and report status information via the first-type signaling. The first-type wireless transceiver apparatus is also configured to receive second-type signaling returned by the second-type wireless transceiver apparatus, and perform data transmission and/or to perform measurement according to a resource allocation indication allocated by the second-type wireless transceiver apparatus. The second-type wireless transceiver apparatus is configured to receive the first-type signaling from the first-type wireless transceiver apparatus, perform resource allocation according to the reported status information, and return the resource allocation indication to the first-type wireless transceiver apparatus through the second-type signaling.

Preferably, the first-type wireless transceiver apparatus is a small cell base station, and the second-type wireless transceiver apparatus is a macro base station, and/or, the first-type wireless transceiver apparatus is a slave base station of the second-type wireless transceiver apparatus which has a master-slave relationship with the first-type wireless transceiver apparatus, and the second-type wireless transceiver apparatus is a master base station of the first-type wireless transceiver apparatus which has the master-slave relationship with the second-type wireless transceiver apparatus, and/or, the first-type wireless transceiver device is a base station which has an equal relationship with the second-type wireless transceiver apparatus, and the second-type wireless transceiver apparatus is a base station which has the equal relationship with the first-type wireless transceiver apparatus.

Preferably, the small cell base station is one or more of Micro, Pico, Femto, RRH, Relay, and so on.

Preferably, the master-slave relationship is a relationship of resource allocation versus status information reporting.

Preferably, the slave base station is a base station for reporting status information and the master station is a base station for allocating resources.

Preferably, there is a designated reception-transmission relationship between the first-type wireless transceiver apparatus and the second-type wireless transceiver apparatus.

Preferably, the first-type wireless transceiver apparatus performs data transmission and/or to performs measurement according to the second-type signaling, and further informs a terminal to measure.

Preferably, the measurement is at least one of radio link monitor (RLM), radio resource management (RRM), reference signal received power (RSRP), reference signal received quality (RSRQ), received signal strength indicator (RSSI), interference measurement and channel status measurement.

Preferably, the channel status measurement includes reference signal and/or synchronization signal based measurement.

Preferably, the second-type wireless transceiver apparatus determines a resource allocation manner according to the first-type signaling received from one or more first-type wireless transceiver apparatuses, and informs the one or more first-type wireless transceiver apparatuses via signaling.

Preferably, the second-type wireless transceiver apparatus suggests the first-type wireless transceiver apparatus use corresponding resources indicated by the second-type signaling. That is, the second-type wireless transceiver apparatus sends the second-type signaling to indicate the resource allocation. The first-type wireless transceiver apparatus may use the resources with reference to the indication, but does not have to use the resources completely according to the indication, which will be described in the following embodiments and herein no repetition is needed.

Preferably, the second-type wireless transceiver apparatus can be the first-type wireless transceiver apparatus, and the first-type wireless transceiver apparatus can be the second-type wireless transceiver apparatus.

Preferably, resource allocation cooperation can be performed between the wireless transceiver apparatuses in the group unit.

Preferably, resource allocation cooperation between the group units can be further performed via the second-type wireless transceiver base station.

Preferably, the second-type signaling is resource indication signaling.

Preferably, the resource indication signaling includes an indication of time-domain and/or frequency-domain resources capable of being scheduled and used by the first-type wireless transceiver apparatus, and/or an indication of resource allocation duration.

Preferably, the second-type signaling is delivered by a signaling exchange interface between wireless transceiver apparatuses.

Preferably, the signaling exchange interface is one of an X2 interface, a radio resource control (RRC) signaling interface, and an operation, maintenance and management (OAM) interface.

Preferably, the delivery by the signaling exchange interface includes delivering via a newly-added non-UE-related message and/or an existing non-UE related message over the signaling exchange interface.

Preferably, the existing non-UE related message over the signaling exchange interface is an Almost Blank Subframe information (ABS Information) message over the signaling exchange interface, and/or a Relative Narrowband Tx Power message over the signaling exchange interface; the newly-added non-UE-related message over the signaling exchange interface is a ABS or switch status indication message, and/or a bitmap message for indicating information occupied by a Hybrid Automatic Repeat request

(HARQ) process, and/or a bitmap message for indicating frequency-domain physical resources block (PRB) distribution.

Preferably, the ABS Information message is an almost blank subframe pattern (ABS pattern) used by the second-type wireless transceiver apparatus itself.

Preferably, the first-type wireless transceiver apparatus receives the ABS Information message from the second-type wireless transceiver apparatus so as to preferentially schedule victim UE at ABS configured by the second-type wireless transceiver apparatus.

Preferably, the ABS information message or switch status indication message is an ABS pattern or switch pattern that the second-type wireless transceiver apparatus suggests or indicates the first-type wireless transceiver apparatus use.

Preferably, the first-type wireless transceiver apparatus receives an ABS indication message from the second-type wireless transceiver apparatus so as to not schedule or schedule with a low power users at the ABS. The ABS indication message may be a switch status indication message indicating an Open status when the ABS is a non-blank subframe and indicating a Close status when the ABS is a blank subframe. Preferably, the first-type signaling is status report signaling.

Preferably, the status report signaling can be at least one of an evolution of community global identifier (ECGI), a resource request message, a request resource size, a loading indication, a traffic priority indication, a traffic service or channel quality indication, a traffic activity prediction indication, a resource utilization situation, a resource release message and so on.

Preferably, the status report signaling can be combined codes of at least one of: an ECGI, a resource request message, a request resource size, a loading indication, a traffic priority indication, a traffic service or channel quality indication, a traffic activity prediction indication, a resource utilization situation, a resource release message and so on.

Preferably, the first-type signaling is delivered by a signaling exchange interface between wireless transceivers apparatuses.

Preferably, the signaling exchange interface is one of an X2 interface, a RRC signaling interface, and an OAM interface.

A method for interference coordination between communication nodes includes the following.

Firstly, the first-type wireless transceiver apparatus sends first-type signaling to the second-type wireless transceiver apparatus, and reports status information via the first-type signaling.

Secondly, the second-type wireless transceiver apparatus receives the first-type signaling from the first-type wireless transceiver apparatus for resource allocation. Specifically, the resource allocation is performed based on the reported status information contained in the first-type signaling. The second-type wireless transceiver apparatus sends the second-type signaling to the first-type wireless transceiver apparatus, and indicates the resource allocation via the second-type signaling.

Finally, the first-type wireless transceiver apparatus receives the second-type signaling from the second-type wireless transceiver apparatus and transmits and/or measures data according to the second-type signaling. Specifically, the data is transmitted and/or measured based on a resource allocation indication contained in the second-type signaling.

To sum up, according to the embodiments of the present disclosure, by the coordination between communication nodes, the interference to users from adjacent communication nodes is resolved to a certain extent in the dense network deployment, thereby ensuring reliable reception of the users' downlink data.

The implementation of the technical solutions is further described in combination with the accompany drawings.

The following embodiments are mainly applicable in a heterogeneous network, but also apply in a homogeneous network system, and thus no repetition is needed.

Fig. 2 is a flow chart of the implementation principle of a method of signaling interaction between communication nodes according to an embodiment of the present disclosure. The communication nodes include a first-type wireless transceiver apparatus and a second-type wireless transceiver apparatus. As shown in Fig. 2, the process includes the following steps.

Step 101, the first-type wireless transceiver apparatus sends first-type signaling to the second-type wireless transceiver apparatus for reporting status information via the first-type signaling.

Herein, the second-type wireless transceiver apparatus receives the first-type signaling from the first-type wireless transceiver apparatus so as to perform resource allocation based on the reported status information.

It is to be noted that the representation of the first-type signaling may have a variety of forms, and is not limited to the examples in the embodiment.

Step 102, the second-type wireless transceiver apparatus sends second-type signaling to the first-type wireless transceiver apparatus for indicating resource allocation via the second-type signaling.

Herein, the first-type wireless transceiver apparatus receives the second-type signaling from the second-type wireless transceiver apparatus, and performs data transmission and/or to performs measurement based on the allocated resource allocation.

It is to be noted that the representation of the signaling may have a variety of forms, and is not limited to the examples in the embodiment.

### Embodiment 1:

In this embodiment, a method for time domain interference coordination between communication nodes is provided. Based on the principle flow chart shown in Fig. 2, when the first-type wireless transceiver apparatus specifically is Pico eNB1 and/or Pico eNB2, and the second-type wireless transceiver apparatus specifically is Pico eNB0, the process of this embodiment includes the following steps.

Step 201, Pico eNB1 sends signaling b1=1 to Pico eNB0 over the OAM interface, and Pico eNB2 sends signaling b1=0 to Pico eNB0 over the OAM interface. The above signaling indicates whether to apply for resources, wherein 1 indicates to apply, and 0 means not to apply. A Cell ID is sent at the same time.

Herein, Pico eNB0 allocates resources for Pico eNB1 according to the received signaling b1 and does not allocate resources for Pico eNB2, while resources are allocated for Pico eNB0.

Step 202, Pico eNB0 sends signaling a1=1 to Pico eNB1 over the OAM interface, and sends a1= 0 to Pico eNB2 over the OAM interface. The above signaling represents an on/off status indication message, wherein 1 means ON and 0 means OFF.

Herein, after Pico eNB1 receives signaling a1 and converts its status to be "ON," it starts to serve users for data transmission. Pico eNB2 receives signaling a1 and then converts its status to be off.

According to the above process in the embodiment of the present disclosure, the interference between adjacent communication nodes can be solved to some extent.

### Embodiment 2:

In this embodiment, a method for time domain interference coordination between communication nodes is provided. Based on the principle flow chart shown in Fig. 2, when the first-type wireless transceiver apparatus specifically is Relay eNB1 and/or Relay eNB2 and/or Relay eNB3 and/or Relay eNB4, and the second-type wireless transceiver apparatus specifically is Macro eNB, the process of this embodiment includes the following steps.

Step 301, Relay eNB1 sends signaling b1b2b3b4=0000 to Macro eNB through the RRC interface, Relay eNB2 sends signaling b1b2b3b4=0100 to Macro eNB through the X2 interface, Relay eNB3 sends signaling b1b2b3b4=1001 to Macro eNB through the X2 interface, and Relay eNB4 sends signaling b1b2b3b4=0111 to Macro eNB through the X2 interface.

Herein, in the above signaling, b1b2 represents traffic priority wherein 00 indicates low priority, 01 indicates medium priority and 10 indicates high priority, and b3b4 represents load conditions, wherein 00 indicates low load, 01 indicates moderate load, 10 indicates high load and 11 indicates overloading. A Cell ID is sent at the same time.

Herein, Macro eNB allocates resources for Relay eNB1, Relay eNB2, Relay eNB3 and Relay eNB4 based on the received signaling b1b2b3b4, taken into account traffic priority and load conditions of the current cell.

Step 302, Macro eNB sends signaling a1a2a3a4a5a6a7a8 = 11111111 to Relay eNB1 through the X2 interface, sends a1a2a3a4a5a6a7a8 = 01111111 to Relay eNB2 through the X2 interface, sends a1a2a3a4a5a6a7a8 = 10000111 to Relay eNB3 through the X2 interface, and sends a1a2a3a4a5a6a7a8 = 11111000 to Relay eNB4 through the X2 interface. The above signaling represents whether to configure ABS on a subframe corresponding to the HARQ process, wherein 1 indicates to configure an ABS subframe, and 0 means not to configure an ABS subframe.

Herein, after Relay eNB1 receives signaling a1a2a3a4a5a6a7a8, all the subframes corresponding to the HARQ process 1/2/3/4/5/6/7/8 are configured as ABS subrames. After Relay eNB2 receives signaling a1a2a3a4a5a6a7a8, the subframes corresponding to the HARQ process 2/3/4/5/6/7/8 are configured as ABS subframes. After Relay eNB3 receives signaling a1a2a3a4a5a6a7a8, the subframes corresponding to the HARQ process 1/6/7/8 are configured as ABS subframes. After Relay eNB4 receives signaling a1a2a3a4a5a6a7a8, the subframes corresponding to the HARQ process 1/2/3/4/5 are configured as ABS subframes.

According to the above process in the embodiment of the present disclosure, the interference between adjacent communication nodes can be solved to some extent.

### Embodiment 3:

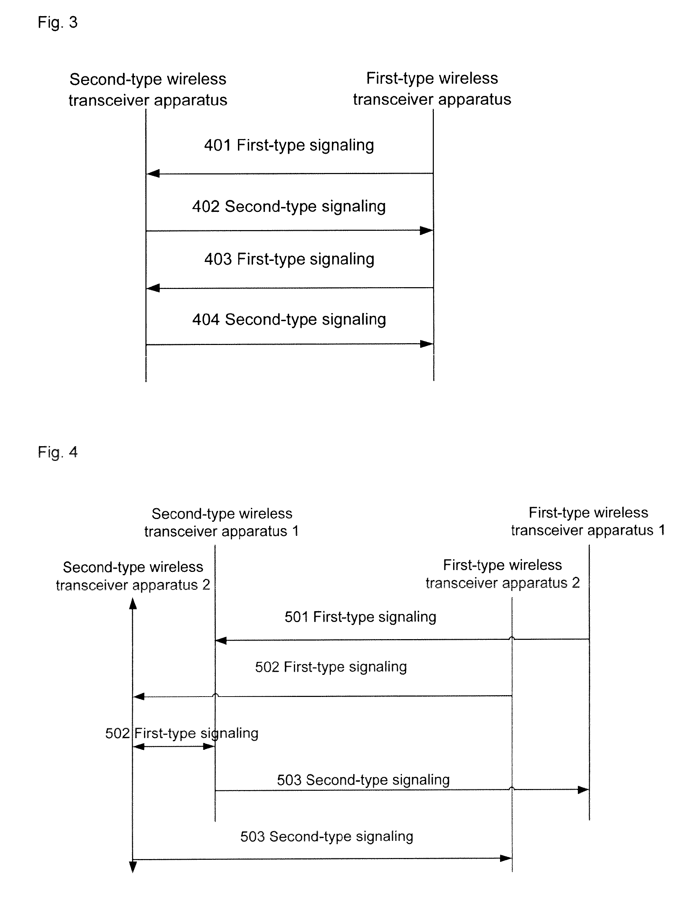

In this embodiment, a method for time domain interference coordination between communication nodes is provided. Fig. 3 is a flow chart of signaling interaction between communication nodes according to an embodiment of the present disclosure. When the first-type wireless transceiver apparatus specifically is Pico eNB1 and/or Pico eNB2 and/or Pico eNB3 and/or Pico eNB4, and the second-type wireless transceiver apparatus specifically is Macro eNB, the process of this embodiment includes the following steps.

Step 401, Pico eNB1 sends signaling b1b2b3b4b5=00000 to Macro eNB through the X2 interface, Pico eNB2 sends signaling b1b2b3b4b5=01000 to Macro eNB through the X2 interface, Pico eNB3 sends signaling b1b2b3b4b5=10000 to Macro eNB through the X2 interface, Pico eNB4 sends signaling b1b2b3b4b5=00110 to Macro eNB through the X2 interface.

Herein, in the above signaling, b1b2 represents traffic priority, wherein 00 indicates low priority, 01 indicates medium priority and 10 indicates high priority, b3b4 represents load conditions, wherein 00 indicates low load, 01 indicates moderate load, 10 indicates high load and 11 indicates overloading, and b5 is a resource release identifier, wherein 1 indicates to release resources and 0 indicates not to release resources. A Cell ID is sent at the same time.

Macro eNB allocates resources for Pico eNB1, Pico eNB2, Pico eNB3, Pico eNB4 based on the received signaling b1b2b3b4b5, considering traffic priority and load conditions of the current cell.

Step 402, Macro eNB sends signaling a1a2a3 a4a5a6a7a8=01111111 to Pico eNB1 through the X2 interface, sends a1a2a3a4a5a6a7a8=10011111 to Pico eNB2 through the X2 interface, sends a1a2a3a4a5a6a7a8=11100111 to Pico eNB3 through the X2 interface, sends a1a2a3a4a5a6a7a8 = 11111000 to Pico eNB4 through the X2 interface. The above signaling represents whether to configure ABS on a subframe corresponding to the HARQ process, wherein 1 indicates to configure an ABS subframe, and 0 means not to configure an ABS subframe.

Herein, after Pico eNB1 receives signaling a1a2a3a4a5a6a7a8, all the subframes corresponding to the HARQ process 2/3/4/5/6/7/8 are configured as ABS subrames. After Pico eNB2 receives signaling a1a2a3a4a5a6a7a8, the subframes corresponding to the HARQ process 1/4/5/6/7/8 are configured as ABS subframes. After Pico eNB3 receives signaling a1a2a3a4a5a6a7a8, the subframes corresponding to the HARQ process 1/2/3/6/7/8 are configured as ABS subframes. After Pico eNB4 receives signaling a1a2a3a4a5a6a7a8, the subframes corresponding to the HARQ process 1/2/3/4/5 are configured as ABS subframes.

Step 403, Pico eNB1 sends signaling b1b2b3b4b5=00001 to Macro eNB, Pico eNB2 sends signaling b1b2b3b4b5=01000 to Macro eNB, Pico eNB3 sends signaling b1b2b3b4b5=10001 to Macro eNB, and Pico eNB4 sends signaling b1b2b3b4b5=00110 to Macro eNB. In the above signaling, b1b2 represents traffic priority, wherein 00 indicates low priority, 01 indicates medium priority and 10 indicates high priority, b3b4 represents load conditions, wherein 00 indicates low load, 01 indicates moderate load, 10 indicates high load and 11 indicates overloading, and b5 is a resource release identifier wherein 1 indicates to release resources and 0 indicates not to release resources. A Cell ID is sent at the same time.

Herein, Macro eNB allocates resources for Pico eNB1, Pico eNB2, Pico eNB3, Pico eNB4 based on the received signaling b1b2b3b4b5, considering traffic priority and load conditions of the current cell.

Step 404, Macro eNB sends signaling a1a2a3 a4a5a6a7a8=11111111 to Pico eNB1, sends a1a2a3a4a5a6a7a8=00011111 to Pico eNB2, sends a1a2a3a4a5a6a7a8 =11111111 to Pico eNB3, sends a1a2a3a4a5a6a7a8 = 11100000 to Pico eNB4. The above signaling represents whether to configure an ABS on a subframe corresponding to the HARQ process, wherein 1 indicates to configure an ABS subframe, and 0 means not to configure an ABS subframe.

Herein, after Pico eNB1 receives signaling a1a2a3a4a5a6a7a8, all the subframes corresponding to the HARQ process 1/2/3/4/5/6/7/8 are configured as ABS subrames. After Pico eNB2 receives signaling a1a2a3a4a5a6a7a8, the subframes corresponding to the HARQ process 4/5/6/7/8 are configured as ABS subframes. After Pico eNB3 receives signaling a1a2a3a4a5a6a7a8, the subframes corresponding to the HARQ process 1/2/3/4/5/6/7/8 are configured as ABS subframes. After Pico eNB4 receives signaling a1a2a3a4a5a6a7a8, the subframes corresponding to the HARQ process 1/2/3 are configured as ABS subframes.

According to the above process in the embodiment of the present disclosure, the interference between adjacent communication nodes can be solved to some extent.

### Embodiment 4:

In this embodiment, a method for further interference coordination between communication nodes is provided. Fig. 4 is a flow chart of signaling interaction between communication nodes according to an embodiment of the present disclosure. When the first-type wireless transceiver apparatus 1 specifically is Pico eNB1 and/or Pico eNB2, and the first-type wireless transceiver apparatus 2 specifically is Pico eNB3 and/or Pico eNB4, and the second-type wireless transceiver apparatus 1 specifically is Macro eNB1, and the second-type wireless transceiver apparatus 2 specifically is Macro eNB2, the process of this embodiment includes the following steps.

Step 501, Pico eNB1 sends signaling b1b2b3b4=0000 to Macro eNB1, Pico eNB2 sends signaling b1b2b3b4=0100 to Macro eNB1, Pico eNB3 sends signaling b1b2b3b4=1001 to Macro eNB2 and Pico eNB4 sends signaling b1b2b3b4=0111 to Macro eNB2.

Herein, in the above signaling, b1b2 represents traffic priority wherein 00 indicates low priority, 01 indicates medium priority and 10 indicates high priority, and b3b4 represents load conditions, wherein 00 indicates low load, 01 indicates moderate load, 10 indicates high load and 11 indicates overloading. A Cell ID is sent at the same time.

Step 502, based on the received signaling b1b2b3b4, considering traffic priority and load conditions of the current cell, Macro eNB1 sends b1b2b3b4=0000 to Macro eNB2, and Macro eNB2 sends b1b2b3b4=1010 to Macro eNB1, Macro eNB1 combined with the signaling from Macro eNB2 allocates resources for Pico eNB1 and Pico eNB2, Macro eNB2 combined with the signaling from Macro eNB1 allocates resources for Pico eNB3 and Pico eNB4.

Step 503, Macro eNB1 sends signaling a1a2a3a4a5a6a7a8=11111111 to Pico eNB1 and sends a1a2a3a4a5a6a7a8=00111111 to Pico eNB2, Macro eNB2 sends a1a2a3a4a5a6a7a8= 11000111 to Pico eNB3 and sends a1a2a3a4a5a6a7a8= 11111000 to Pico eNB4. The above signaling represents whether to configure an ABS on a subframe corresponding to the HARQ process, wherein 1 indicates to configure an ABS subframe, and 0 means not to configure an ABS subframe.

Herein, after Pico eNB1 receives signaling a1a2a3a4a5a6a7a8 from Macro eNB1, all the subframes corresponding to the HARQ process 1/2/3/4/5/6/7/8 are configured as ABS subrames. After Pico eNB2 receives signaling a1a2a3a4a5a6a7a8, the subframes corresponding to the HARQ process 3/4/5/6/7/8 are configured as ABS subframes. After Pico eNB3 receives signaling a1a2a3a4a5a6a7a8 from Macro eNB2, the subframes corresponding to the HARQ process 1/2/6/7/8 are configured as ABS subframes. After Pico eNB4 receives signaling a1a2a3a4a5a6a7a8, the subframes corresponding to the HARQ process 1/2/3/4/5 are configured as ABS subframes.

According to the above process in the embodiment of the present disclosure, the interference between adjacent communication nodes can be solved to some extent.

### Embodiment 5:

In this embodiment, a method for frequency domain interference coordination between communication nodes is provided. Based on the principle flow chart shown in Fig. 2, when the first-type wireless transceiver apparatus specifically is Femto eNB1 and/or Femto eNB2, and the second-type wireless transceiver apparatus specifically is Femto eNB0, the process of this embodiment includes the following steps.

Step 601, Femto eNB1 sends signaling b1=1 to Femto eNB0 through the OAM interface, and Femto eNB2 sends signaling b1=1 to Femto eNB0 through the OAM interface. The above signaling indicates whether to apply for resources, wherein 1 indicates to apply, and 0 means not to apply. A Cell ID is sent at the same time.

Herein, Femto eNB0 allocates resources for Femto eNB1 and Femto eNB2 according to the received signaling b1.

Step 602, Femto eNB0 sends signaling a1a2a3a4a5a6=111000 to Femto eNB1 through the OAM interface, and sends a1a2a3a4a5a6=000111 to Femto eNB2 through the OAM interface. The above signaling represents Physical Resource Block (PRB) allocation indication in the frequency domain, wherein 1 means to allocate the PRB and 0 means not to allocate the PRB.

Herein, after Femto eNB1 receives the signaling a1a2a3a4a5a6, the user is scheduled to transmit data on PRB 1/2/3 in frequency domain, but the user is not scheduled or scheduled with a low power to transmit data on PRB 4/5/6 in frequency domain. After Femto eNB2 receives the signaling a1a2a3a4a5a6, the user is scheduled to transmit data on PRB 4/5/6 in frequency domain, but the user is not scheduled or scheduled with a low power to transmit data on PRB 1/2/3 in frequency domain.

According to the above process in the embodiment of the present disclosure, the interference between adjacent communication nodes can be solved to some extent.

### Embodiment 6:

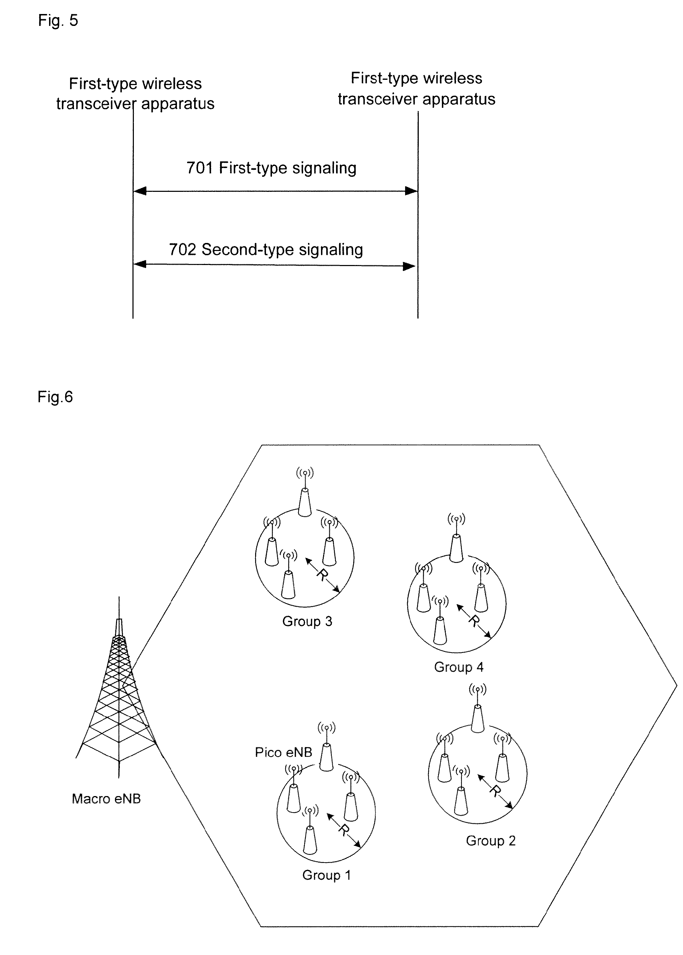

In this embodiment, a method for time domain interference coordination between communication nodes is provided. Fig. 5 is flow chart of signaling interactions between peer-to-peer base stations according to an embodiment of the present disclosure. When the first-type wireless transceiver apparatus specifically is Pico eNB1 and the second-type wireless transceiver apparatus specifically is Pico eNB2, the process of this embodiment includes the following steps.

Step 701, Pico eNB1 sends signaling b1b2b3b4=0011 through the X2 interface to Pico eNB2 and Pico eNB2 sends b1b2b3b4=0110 to Pico eNB1 through the X2 interface.

Herein, in the above signaling, b1b2 represents traffic priority wherein 00 indicates low priority, 01 indicates medium priority and 10 indicates high priority and b3b4 represents load conditions, wherein 00 indicates low load, 01 indicates moderate load, 10 indicates high load and 11 indicates overloading. A Cell ID is sent at the same time.

Herein, after Pico eNB1 receives the signaling b1b2b3b4, resource allocation is performed. After Pico eNB2 receives the signaling b1b2b3b4, resource allocation is performed and it is determined which eNB first uses the HARQ process based on traffic priority.

Step 702, Pico eNB1 sends signaling a1a2a3a4a5a6a7a8=11111000 to Pico eNB2, and Pico eNB2 sends signaling a1a2a3a4a5a6a7a8=11100000 to Pico eNB1.

Herein, the above signaling represents whether to configure an ABS on a subframe corresponding to the HARQ process, wherein 1 indicates to configure an ABS subframe, and 0 means not to configure an ABS subframe.

Herein, after Pico eNB1 receives the signaling a1a2a3a4a5a6a7a8, the subframes corresponding to the HARQ process 1/2/3/4/5 are configured as ABS subrames. After Pico eNB2 receives the signaling a1a2a3a4a5a6a7a8, the subframes corresponding to the HARQ process 6/7/8 are configured as ABS subframes.

According to the above process in the embodiment of the present disclosure, the interference between adjacent communication nodes can be solved to some extent.

### Embodiment 7:

In this embodiment, a method for time domain interference coordination between communication nodes is provided. Based on the principle flow chart shown in Fig. 2, when the first-type wireless transceiver apparatus specifically is Pico eNB1 and/or Pico eNB2, and the second-type wireless transceiver apparatus specifically is Macro eNB, the process of this embodiment includes the following steps.

Step 801, Pico eNB1 sends signaling b1b2b3b4b5b6 = 001110 to Macro eNB through the X2 interface, and Pico eNB2 sends b1b2b3b4b5b6=011001 to Macro eNB through the X2 interface.

Herein, in the above signaling, b1b2 represents traffic priority wherein 00 indicates low priority, 01 indicates medium priority and 10 indicates high priority, b3b4 represents load conditions, wherein 00 indicates low load, 01 indicates moderate load, 10 indicates high load and 11 indicates overloading, and b5b6 represents traffic service or channel quality, wherein 00 indicates low service or channel quality level, 01 indicates moderate service or channel quality level, 10 indicates high service or channel quality level. A Cell ID is sent at the same time.

Herein, Macro eNB allocates resources for Pico eNB1 and Pico eNB2 based on the received signaling b1b2b3b4b5b6, taken into account traffic priority, load conditions and traffic service or channel quality level of the current cell.

Step 802, Macro eNB sends signaling a1a2a3a4a5a6a7a8=00011111 to Pico eNB1, and sends a1a2a3a4a5a6a7a8=11100000 to Pico eNB2.

Herein, the above signaling represents whether to configure an ABS on a subframe corresponding to the HARQ process, wherein 1 indicates to configure an ABS subframe, and 0 means not to configure an ABS subframe.

Herein, after Pico eNB1 receives the signaling a1a2a3a4a5a6a7a8 from Marco eNB, combined with its traffic priority, load conditions and traffic services or channel quality level, the subframes corresponding to the HARQ process 6/7/8 are configured as ABS subframes. After Pico eNB2 receives the signaling a1a2a3a4a5a6a7a8 from Marco eNB, combined with its traffic priority, load conditions and traffic services or channel quality level, the subframes corresponding to the HARQ process 1/2 are configured as ABS subframes.

According to the above process in the embodiment of the present disclosure, the interference between adjacent communication nodes can be solved to some extent.

### Embodiment 8:

In this embodiment, the system for interference coordination between communication nodes also includes group units. The group unit is configured to divide the wireless transceiver apparatuses in the network topology into several groups, wherein the wireless transceiver apparatuses in one group include the first-type wireless transceiver apparatus and/or the second-type wireless transceiver apparatus. Specifically, in the topology of grouping of the wireless transceiver apparatus in this embodiment, the grouping is performed based on geographic locations of Pico eNBs, as shown in Fig. 6.

### Embodiment 9:

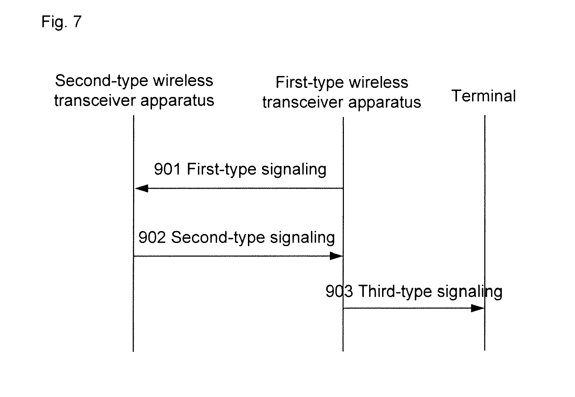

In this embodiment, a method for time domain interference coordination between communication nodes is provided. Based on the principle flow chart shown in Fig. 7, when the first-type wireless transceiver apparatus specifically is Pico eNB1, and/or Pico eNB2 and the second-type wireless transceiver apparatus specifically is Pico eNB0, the process of this embodiment includes the following steps.

Step 901, Pico eNB1 sends signaling b1=1 to Pico eNB0 through the X2 interface, and Pico eNB2 sends signaling b1=1 to Pico eNB0 through the X2 interface. The above signaling indicates whether to apply for resources, wherein 1 indicates to apply, and 0 means not to apply. A Cell ID is sent at the same time.

Herein, Pico eNB0 allocates resources for Pico eNB1 according to the received signaling b1 and does not allocate resources for Pico eNB2, while resources are allocated for Pico eNB0.

Step 902, Pico eNB0 sends signaling a1a2a3a4a5a6a7a8 = 11100000 to Pico eNB1 through the X2 interface and sends a1a2a3a4a5a6a7a8 = 00011100 to Pico eNB2 through the X2 interface. The above signaling represents HARQ process allocation indication, wherein 1 indicates to allocate the HARQ process, and 0 means not to allocate the HARQ process.

Herein, after Pico eNB1 receives the signaling a1a2a3a4a5a6a7a8, RRM/RLM measurement is performed on the subframes corresponding to HARQ processes 1/2/3. After Pico eNB2 receives the signaling a1a2a3a4a5a6a7a8, RRM/RLM measurement is performed on the subframes corresponding to HARQ processes 4/5/6. Pico eNB0 performs RRM/RLM measurement on the subframes corresponding to HARQ processes 7/8.

Pico eNB1 sends signaling b1b2b3b4b5b6b7b8 = 11100000 to UE1 via the RRC. Pico eNB2 sends signaling b1b2b3b4b5b6b7b8=00011000 to UE2 via the RRC. Pico eNB0 sends signaling b1b2b3b4b5b6b7b8 = 00000011 to UE3 and UE4 via the RRC.

Herein, after UE1 receives b1b2a3b4b5b6b7b8, UE1 performs CSI measurement on the subframes corresponding to the HARQ processes 1/2/3 and reports CSI1 to Pico eNB1, and performs CSI measurement on the subframes corresponding to the HARQ processes 4/5/6/7/8 and reports CSI0 to Pico eNB1. After UE2 receives b1b2a3b4b5b6b7b8, UE2 performs CSI measurement on the subframes corresponding to the HARQ processes 4/5 and reports CSI1 to Pico eNB2, and performs CSI measurement on the subframes corresponding to the HARQ processes 1/2/3/6/7/8 and reports CSI0 to Pico eNB2. After UE3 and UE4 receive b1b2a3b4b5b6b7b8, CSI measurement is performed on the subframes corresponding to the HARQ processes 7/8 and CSI1 is reported to Pico eNB0 and CSI measurement is performed on the subframes corresponding to the HARQ processes1/2/3/4/5/6 and CSI0 is reported to Pico eNB0.

According to the above process in the embodiment of the present disclosure, the interference between adjacent communication nodes can be solved to some extent.

Apparently, those skilled in the art should understand, individual modules or individual steps as stated above in the present disclosure may be implemented in one or more general-purpose computer devices. They can be integrated into a single computer device, or can be distributed in a network which consists of several computer devices. Alternatively, they may be implemented in computer-executable program codes and thus they can be stored in storage and be executed by computers. In some cases, the described or shown steps may be carried out in a different order from that described herein. They also can be made into individual integrated circuit modules or a plurality of modules or steps therein may be made into a single integrated circuit module. As such, the present disclosure is not limited into any special combination of hardware and softwa re.

The foregoing is only the preferred embodiments of the invention and not intended to limit the scope of protection of the present invention.

### Industrial applicability

According to the embodiments of the present disclosure, a first-type wireless transceiver apparatus reports status information by sending first-type signaling to a second-type wireless transceiver apparatus, and transmits and/or measures data according to second-type signaling. The second-type wireless transceiver apparatus allocates resources according to the first-type signaling, and indicates the resource allocation by sending the second-type signaling to the first-type wireless transceiver apparatus. By using the embodiments of the present disclosure, since the resources can be coordinated between adjacent communication nodes via the status information contained in the signaling, the interference problem can be effectively solved.

## Claims

1. A system for interference coordination between communication nodes, comprising a first-type wireless transceiver apparatus and a second-type wireless transceiver apparatus, wherein,
the first-type wireless transceiver apparatus is configured to send first-type signaling to the second-type wireless transceiver apparatus to report status information, and to perform data transmssion and/or to perform measurement according to second-type signaling; and
the second-type wireless transceiver apparatus is configured to perform resource allocation according to the first-type signaling and send the second-type signaling to the first-type wireless transceiver apparatus to indicate the resource allocation.

2. The system of claim 1, wherein the first-type wireless transceiver apparatus is further configured to perform data transmission and/or to perform measurement according to a resource allocation indication contained in the second-type signaling; and
the second-type wireless transceiver apparatus is further configured to perform the resource allocation according to the status information contained in the first-type signaling, and derive the resource allocation indication.

3. The system of claim 1, wherein the first-type wireless transceiver apparatus is a small cell base station, and the second-type wireless transceiver apparatus is a Macro base station; and/or,
the first-type wireless transceiver apparatus is a slave base station of the second-type wireless transceiver apparatus which has a master-slave relationship with the first-type wireless transceiver apparatus, and the second-type wireless transceiver apparatus is a master base station of the first-type wireless transceiver apparatus which has the master-slave relationship with the second-type wireless transceiver apparatus; and/or,
the first-type wireless transceiver device is a base station which has an equal relationship with the second-type wireless transceiver apparatus, and the second-type wireless transceiver apparatus is a base station which has the equal relationship with the first-type wireless transceiver apparatus.

4. The system of claim 3, wherein the master-slave relationship is a relationship of resource allocation from one side and status information reporting from another side.

5. The system of claim 3, wherein the slave base station is a base station for reporting status information and the master station is a base station for allocating resources.

6. The system of claim 1, wherein there is a designated reception-transmission relationship between the first-type wireless transceiver apparatus and the second-type wireless transceiver apparatus.

7. The system of any one of claims 1-6, wherein the second-type wireless transceiver apparatus is further configured to determine a manner of resource allocation according to the first-type signaling received from one or more first-type wireless transceiver apparatuses, and inform the one or more first-type wireless transceiver apparatuses of the determined manner of resource allocation via the second-type signaling.

8. The system of any one of claims 1-6, wherein the first-type wireless transceiver apparatus is further configured to perform data transmission and/or to perform measurement according to the second-type signaling, and inform a terminal to perform measurement.

9. The system of any one of claims 1-6, wherein the measurement is at least one of radio link monitoring (RLM), radio resource management (RRM), reference signal received power (RSRP), reference signal received quality (RSRQ), received signal strength indicator (RSSI), interference measurement and channel status measurement;
wherein the channel status measurement comprises reference signal based and/or synchronization signal based measurement.

10. The system of any one of claims 1-6, further comprising a group unit configured to divide wireless transceiver apparatuses in a network topology into groups.

11. The system of claim 10, wherein wireless transceiver apparatuses in one group comprise the first-type wireless transceiver apparatus and/or the second-type wireless transceiver apparatus.

12. The system of claim 10, wherein the group unit is further configured to divide the wireless transceiver apparatuses into groups based on geographic locations of the wireless transceiver apparatuses.

13. The system of claim 10, wherein the group unit is further configured to perform resource allocation cooperation according to the wireless transceiver apparatuses in the group unit.

14. The system of claim 13, wherein the group unit is further configured to perform the resource allocation cooperation between the group units via the second-type wireless transceiver apparatus.

15. A method for interference coordination between communication nodes, comprising:
sending, by a first-type wireless transceiver apparatus, first-type signaling to a second-type wireless transceiver apparatus to report status information, and peforming data transmission and/or performing measurement according to second-type signaling; and
performing, by the second-type wireless transceiver apparatus, resource allocation according to the first-type signaling and sending the second-type signaling to the first-type wireless transceiver apparatus to indicate the resource allocation.

16. The method of claim 15, further comprising:
performing, by the second-type wireless transceiver apparatus, the resource allocation according to the status information contained in the first-type signaling, and deriving a resource allocation indication; and
transmitting and/or measuring, by the first-type wireless transceiver apparatus, the data according to the resource allocation indication contained in the second-type signaling.

17. The method of claim 15, wherein the second-type signaling is resource indication signaling.

18. The method of claim 17, wherein the resource indication signaling comprises an indication of time-domain and/or frequency-domain resources capable of being scheduled and used by the first-type wireless transceiver apparatus, and/or an indication of resource allocation duration.

19. The method of claim 15, wherein the second-type signaling is delivered by a signaling exchange interface between the first-type wireless transceiver apparatus and the second-type wireless transceiver apparatus.

20. The method of claim 19, wherein the signaling exchange interface is one of an X2 interface, a radio resource control (RRC) signaling interface, and an operation, maintenance and management (OAM) interface.

21. The method of claim 19, wherein the delivery by the signaling exchange interface comprises delivering via a newly-added non-UE-related message and/or an existing non-UE related message over the signaling exchange interface.

22. The method of claim 21, wherein the existing non-UE related message comprises an Almost Blank Subframe information (ABS Information) message and/or a Relative Narrowband Tx Power message; and
wherein the newly-added non-UE-related message comprises a ABS or switch status indication message, and/or a bitmap message for indicating information occupied by a Hybrid Automatic Repeat reQuest (HARQ) process, and/or a bitmap message for indicating frequency-domain physical resources block (PRB) distribution.

23. The method of claim 16, wherein the first-type signaling is status report signaling.

24. The method of claim 23, wherein the status report signaling is at least one of the following information: an E-UTRAN Cell Global Identifier (ECGI), a resource request message, a request resource size, a loading indication, a traffic priority indication, a traffic service or channel quality indication, a traffic activity prediction indication, a resource utilization situation and a resource release message.

25. The method of claim 24, wherein the first-type signaling is delivered by a signaling exchange interface between the first-type wireless transceiver apparatus and the second-type wireless transceiver apparatus.
